# EUROPEAN PATENT APPLICATION

(11) **EP 4 553 255 A1**
(43) Date of publication of application: **14.05.2025**
(21) Application number: 24799108.6
(22) Date of filing: 02.08.2024
(51) Int. Cl.: E04H 12/00, E04H 12/24, E04H 12/18, H02G 7/00, H02G 7/05, H02G 7/04, H02G 7/02, H02G 7/20, H01B 17/16, H01B 17/38

(54) **TRANSMISSION TOWER**

(30) Priority: 25.09.2023 CN 202311244044; 25.07.2024 CN 202411010905
(71) Applicant: Shanghai Shemar Power Engineering Co., Ltd., Shanghai 200050 (CN)
(72) Inventor: WANG, Xinlong, Shanghai 200050 (CN); LI, Yanlin, Shanghai 200050 (CN); WANG, Chen, Shanghai 200050 (CN)
(74) Representative: Mewburn Ellis LLP
(86) International application number: PCT/CN2024/109421
(87) International publication number: WO 2025/066544

(57) **Abstract**

The present application provides a transmission tower, including a tower body; and a composite crossarm arranged on the tower body. The composite crossarm includes at least one post insulator, at least one suspension insulator, and a node fitting, the post insulator has a first end connected to the tower body and a second end, the suspension insulator has a first end connected to the tower body and a second end, the second end of the post insulator and the second end of the suspension insulator are connected together by the node fitting, and the node fitting includes: a first connecting plate configured to be connected to the second end of the post insulator and comprising a first surface and a second surface which are opposite; at least one second connecting plate mounted on the first surface, having a side connected to the first surface, and configured to be connected to the second end of the suspension insulator; and a shielding ring mounted on the first surface. The above design can make space design of the node fitting more compact and guarantee a safety performance of the node fitting.

## Description

### TECHNICAL FIELD

The present application relates to the field of power transmission technologies, and in particular, to a transmission tower.

### BACKGROUND

In a transmission tower, a node fitting is used for connecting insulators and attaching wires. However, on the one hand, the existing node fitting has a complex structure, occupies a large space, and thus is not conducive to construction and maintenance, and on the other hand, the node fitting is prone to damage in lightning weather, and thus has a low safety performance.

### SUMMARY

In view of this, the present application provides a transmission tower, which can reduce the space occupied by a node fitting and guarantee a compact structure of the node fitting, and can also improve a safety performance of the node fitting to protect the node fitting.

In order to solve the above problems, the present application provides a transmission tower, including a tower body and a composite crossarm arranged on the tower body. The composite crossarm includes at least one post insulator, at least one suspension insulator, and a node fitting. The post insulator has a first end connected to the tower body and a second end. The suspension insulator has a first end connected to the tower body and a second end. The second end of the post insulator and the second end of the suspension insulator are connected together by the node fitting. The node fitting includes: a first connecting plate configured to be connected to the second end of the post insulator and including a first surface and a second surface which are opposite; at least one second connecting plate mounted on the first surface, having a side connected to the first surface, and configured to be connected to the second end of the suspension insulator; and a shielding ring mounted on the first surface.

In the present application, the shielding ring is mounted on the first surface of the first connecting plate, so that on the one hand, the compact structure of the node fitting can be guaranteed, and on the other hand, the shielding ring has a voltage balancing function, can protect the node fitting, and thus guarantees life of the node fitting.

The shielding ring has a half surrounded structure and is arranged on a periphery of the first connecting plate.

At least one connecting bracket is convexly arranged on the shielding ring, and the connecting bracket is connected to the first surface.

The node fitting further includes: a third connecting plate mounted on the first surface, having a side connected to the second connecting plate, and located inside the shielding ring.

Any two of the first connecting plate, the second connecting plate, and the third connecting plate are arranged perpendicularly.

The shielding ring has a plane symmetry structure, and a symmetry plane of the shielding ring is parallel to the first connecting plate.

It is provided with plural shielding rings which are stacked.

The node fitting further includes: a wire attaching plate mounted on the second surface and having a side connected to the second surface, the wire attaching plate is provided with two spaced first wire attaching holes and a first construction hole located between the two first wire attaching holes, and the two first wire attaching holes and the first construction hole are arranged at intervals in a direction parallel to the first connecting plate.

A symmetry plane perpendicular to a plate surface of the first connecting plate, a symmetry plane parallel to a plate surface of the second connecting plate, and a symmetry plane parallel to a plate surface of the wire attaching plate overlap. The first connecting plate is perpendicular to a symmetry plane of a plate surface, the second connecting plate is parallel to the symmetry plane of the plate surface, and the wire attaching plate is parallel to and coincides with the symmetry plane of the plate surface.

The first connecting plate is provided with a first mounting hole for mounting the post insulator; the second connecting plate is provided with a second mounting hole and a second construction hole, and the second mounting hole is configured to mount the suspension insulator.

The transmission tower further includes: a first hinged member configured for connecting the first end of a post insulator to the tower body, so that the post insulator is rotatable relative to the tower body; and a second hinged member configured for connecting the first end of the suspension insulator to the tower body, so that the suspension insulator is rotatable relative to the tower body.

The tower body includes: a tower main body; a first support frame; and a second support frame. The first support frame and the second support frame are convexly arranged on a same side wall of the tower main body, the first support frame is connected to the first end of the post insulator, and the second support frame is connected to the first end of the suspension insulator.

The transmission tower includes at least one arcing device, each arcing device includes an arcing ring and an arcing end, and the arcing ring is provided with a notch, so that the arcing ring has two end portions; the arcing end is located at one of the end portions of the arcing ring, and the arcing end bends in a direction away from the arcing ring.

Two suspension insulators are arranged, two second connecting plates are arranged, and the two second connecting plates are spaced on the first surface and configured to be connected to the two suspension insulators respectively.

A fixing plate is further arranged between the two second connecting plates, the fixing plate is arranged on the first surface and has a side connected to the first surface, and the fixing plate is provided with a third construction hole for construction and maintenance of the composite crossarm.

Beneficial effects: in the present application, the shielding ring is arranged on the first surface of the first connecting plate, so that space design of the entire node fitting is more compact, and meanwhile, the shielding ring can balance a voltage and protect the entire node fitting, thus prolonging the service life of the node fitting.

Further, in the present application, the plurality of shielding rings are stacked, which can improve a protection effect on the node fitting.

Further, due to the arrangement of the first hinged member and the second hinged member, the composite crossarm can rotate relative to the tower body after the post insulator is broken, so that excessive unbalanced tension can be released by rotation, and the tower body is protected from damage.

### BRIEF DESCRIPTION OF THE DRAWINGS

Various other advantages and merits will become apparent to those skilled in the art by reading through the following detailed description of preferred embodiments. Figures are only intended to illustrate preferred embodiments and not construed as limiting the present application. In all figures, like reference numerals denote like parts. In the drawings:
FIG. 1 is a schematic structural diagram of a transmission tower according to an embodiment of the present application;
FIG. 2 is a schematic structural diagram of a node fitting in FIG. 1;
FIG. 3 is a schematic structural diagram of a composite crossarm in FIG. 1;
FIG. 4 is a schematic structural diagram of an arcing device in FIG. 1;
FIG. 5 is a schematic structural diagram of a transmission tower according to another embodiment of the present application; and
FIG. 6 is a schematic enlarged diagram of a node fitting in a composite crossarm in FIG. 5.

### DETAILED DESCRIPTION

The technical solutions in the embodiments of the present application are clearly and completely described with reference to the accompanying drawings in the embodiments of the present application, and apparently, the described embodiments are not all but only a part of the embodiments of the present application. All other embodiments obtained by a person of ordinary skill in the art based on the embodiments of the present application without creative efforts shall fall within the protection scope of the present application.

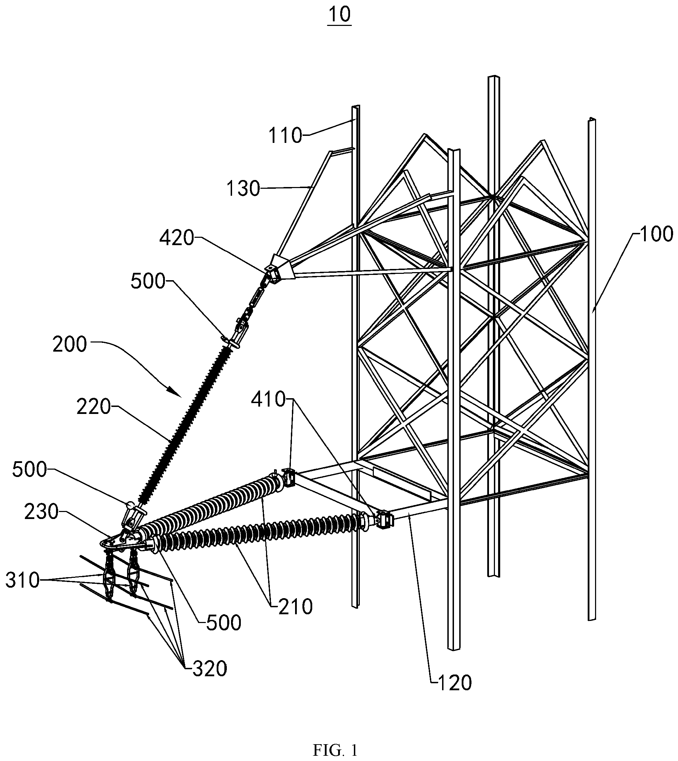

Referring to FIG. 1, the present application provides a transmission tower 10, including a tower body 100 and a composite crossarm 200 arranged on the tower body 100. The composite crossarm 200 includes a post insulator 210, a suspension insulator 220, and a node fitting 230. A first end of the post insulator 210 and a first end of the suspension insulator 220 are connected to the tower body 100, and a second end of the post insulator 210 and a second end of the suspension insulator 220 are connected to the node fitting 230.The node fitting 230 connects the post insulator 210 and the suspension insulator 220 together to form an end portion of the composite crossarm 200 for attaching a conductor 320.

Specifically, the tower body 100 can be a transmission tower of a common structure, such as a lattice tower, a pole or a composite pole tower. The composite crossarm 200 can be arranged on one side of the tower body 100, or the composite crossarms 200 can be arranged on plural sides of the tower body 100. One composite crossarm 200 can be arranged on one side of the tower body 100, or plural composite crossarms 200 can be arranged at intervals in a vertical direction.

In an application scenario, it is provided with two post insulators 210 and one suspension insulator 220 (as shown in FIG. 1), the first end of each of the two post insulators 210 and the first end of the suspension insulator 220 are connected to the tower body 100, the second end of each of the two post insulators 210 and the second end of the suspension insulator 220are connected together by the node fitting 230. The two post insulators 210 are located on a same side of the tower body 100, and the suspension insulator 220 is located above the two post insulators 210. In another application scenario, it is provided with two post insulators and two suspension insulators. In still another application scenario, it is provided with one post insulator and one suspension insulator. In summary, the numbers of the post insulators 210 and the suspension insulators 220 are not limited in the present application.

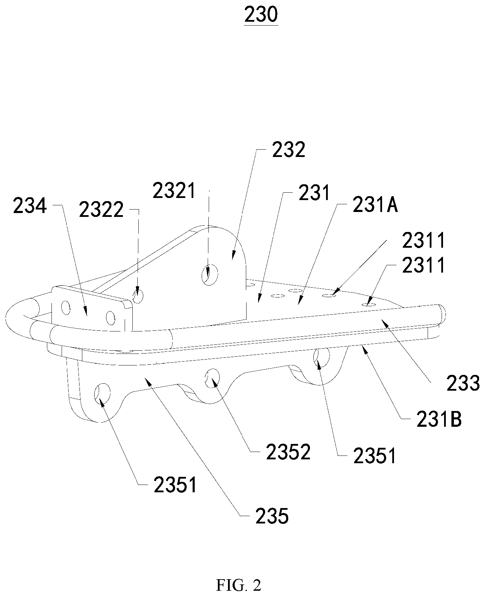

Referring to FIG. 1 and FIG. 2, the node fitting 230 includes a first connecting plate 231, a second connecting plate 232, and a shielding ring 233.

The first connecting plate 231 is configured to be connected to the second end of the post insulator 210, and the first connecting plate 231 includes a first surface 231A and a second surface 231B which are opposite. The second connecting plate 232 is mounted on the first surface 231A and has a side connected to the first surface 231A, and the second connecting plate 232 is configured to be connected to the second end of the suspension insulator 220. The shielding ring 233 is mounted on the first surface 231A.

The first connecting plate 231 is connected to the post insulator 210, and the second connecting plate 232 is connected to the suspension insulator 220, that is, the post insulator 210 and the suspension insulator 220 are connected to different connecting plates. In the present application, the post insulator 210 and the suspension insulator 220 are connected to different connecting plates, which can avoid a concentrated force at a same position and prolong a service life of the node fitting 230.

The shielding ring 233 is mounted on the first surface 231A, so that a space of the node fitting 230 is more compact. The shielding ring 233 can balance a voltage to protect the node fitting 230, which further prolongs the service life of the node fitting 230, thereby prolonging a service life of the composite crossarm 200.

The node fitting 230 in the present application has a simple structure, is convenient to manufacture and has a clear force transmission path and a simple force form.

Referring to FIG. 2, the shielding ring 233 has a half surrounded structure and is arranged on a periphery of the first connecting plate 231.

The shielding ring 233 has a half surrounded structure, that is, is provided with a notch, so as to avoid interference with the post insulator 210. Meanwhile, the shielding ring 233 is arranged on the periphery of the first connecting plate 231 to effectively protect the first connecting plate 231, thereby effectively protecting the node fitting 230. In an application scenario, as shown in FIG. 2, a shape of the shielding ring 233 is matched with an outline of the first connecting plate 231.

Alternatively, in some other embodiments, the shielding ring may have a fully surrounded structure, as long as the second end of the post insulator does not interfere with the shielding ring. Alternatively, the shielding ring can be arranged on the first connecting plate instead of on the periphery of the first connecting plate. In summary, a specific structure and mounting position of the shielding ring 233 are not limited in the present application.

At least one connecting bracket (not shown) is convexly arranged on the shielding ring 233, and the connecting bracket is connected to the first surface 231A.

The shielding ring 233 and the first connecting plate 231 are fixedly connected together by the connecting bracket to guarantee the connection stability.

In an application scenario, a connecting hole (not shown) is formed in the first connecting plate 231, and the connecting bracket is connected to the first connecting plate 231 through the connecting hole.

In some other embodiments, the shielding ring may also be connected to the first connecting plate by means of welding, riveting, or the like.

Referring to FIG. 2, the node fitting 230 further includes a third connecting plate 234 mounted on the first surface 231A and having a side connected to the second connecting plate 232, and meanwhile, the third connecting plate 234 is located inside the shielding ring 233.

The third connecting plate 234 is connected to both of the first connecting plate 231 and the second connecting plate 232, which can increase connecting strength of the first connecting plate 231 and the second connecting plate 232. Furthermore, the third connecting plate 234 can also be provided with some through holes for construction or maintenance. Meanwhile, the third connecting plate 234 is arranged inside the shielding ring 233, so that the shielding ring 233 can well protect the third connecting plate 234.

In some other embodiments, the third connecting plate may also be omitted.

With continued reference to FIG. 2, any two of the first connecting plate 231, the second connecting plate 232, and the third connecting plate 234 are arranged perpendicularly.

The first connecting plate 231, the second connecting plate 232, and the third connecting plate 234 are perpendicular to each other, and during construction or maintenance, a force acting on the third connecting plate 234 can be evenly distributed to the entire node fitting 230, so that the node fitting 230 can be protected to the maximum extent.

With continued reference to FIG. 2, the shielding ring 233 has a plane symmetry structure, and a symmetry plane of the shielding ring 233 is parallel to the first connecting plate 231. The symmetry plane of the shielding ring 233 is parallel to the first connecting plate 231, which can improve the voltage balancing effect of the shielding ring 233.

In other embodiments, it is provided with plural shielding rings, and the plural shielding rings are stacked.

On the first surface, the plural shielding rings can be stacked, and the shielding rings can be connected by the connecting bracket or in a direct contact mode. The arrangement of the plural shielding rings can improve the voltage balancing effect of the shielding ring, then improve protection of the node fitting, and prolong the service life of the node fitting.

It should be noted that the number of the shielding rings 233 is not limited in the present application, and can be one or plural.

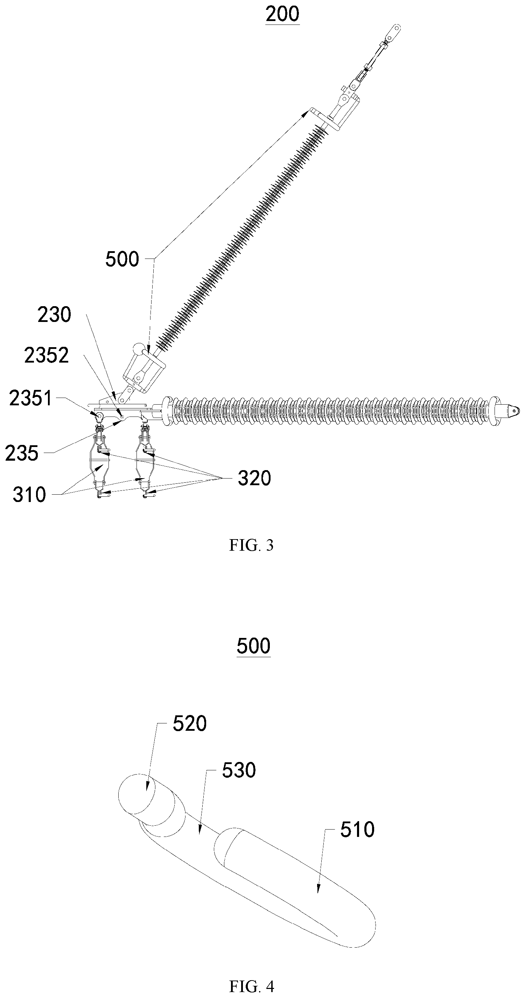

Referring to FIG. 2 and FIG. 3, the node fitting 230 further includes a wire attaching plate 235 mounted on the second surface 231B and having a side connected to the second surface 231B, the wire attaching plate 235 is provided with two spaced first wire attaching holes 2351 and a first construction hole 2352 located between two first wire attaching holes 2351, and the two first wire attaching holes 2351 and the first construction hole 2352 are arranged at intervals in a direction parallel to the first connecting plate 231.

The two first wire attaching holes 2351 of the wire attaching plate 235 are configured to attach wire attaching fitting strings 310, and the first construction hole 2352 is configured for construction or maintenance. The two first wire attaching holes 2351 and the first construction hole 2352 are arranged at intervals in the direction parallel to the first connecting plate 231, which can guarantee force uniformity of the node fitting 230.

For clearer illustration, referring to FIG. 1 to FIG. 3, the node fitting 230 is connected to the wire attaching fitting strings 310 through the wire attaching plate 235, each first wire attaching hole 2351 corresponds to one wire attaching fitting string 310, each wire attaching fitting string 310 corresponds to two conductors 320. In the present embodiment, single-phase quad bundle is attached by the composite crossarm 200 of the transmission tower 10.

In use, according to requirements, the first construction hole 2352 can be configured to attach the wire attaching fitting string 310, and the first wire attaching hole 2351 is configured for construction or maintenance, that is, functions of the first wire attaching hole 2351 and the first construction hole 2352 can be exchanged. Meanwhile, in other embodiments, other numbers of the first wire attaching holes and the first construction hole can also be provided, as long as a wire attaching demand is met.

Referring to FIG. 2, the first connecting plate 231 is perpendicular to a symmetry plane of a plate surface, the second connecting plate 232 is parallel to the symmetry plane of the plate surface, and the wire attaching plate 235 is parallel to and coincides with the symmetry plane of the plate surface, that is, an overall structure formed by the first connecting plate 231, the second connecting plate 232, and the wire attaching plate 235 has a symmetrical structure. Such an arrangement may cause the force on the node fitting 230 to be more even during the connection of the post insulator 210 and the suspension insulator 220, the attaching of the wire attaching fitting string 310, construction and maintenance, so that the composite crossarm 200 can be effectively protected.

Referring to FIG. 1 and FIG. 2, the first connecting plate 231 is provided with a first mounting hole 2311 for mounting the post insulator 210; the second connecting plate 232 is provided with a second mounting hole 2321 and a second construction hole 2322, the second mounting hole 2321 is configured to mount the suspension insulator 220, and the second construction hole 2322 is configured for construction or maintenance.

The number of the first mounting holes 2311 can be one or plural, and can be set according to an actual situation. The arrangement of the first mounting hole 2311 can facilitate mounting and connection between the post insulator 210 and the first connecting plate 231. The number of the second mounting holes 2321 can be one or plural, and can be set according to an actual situation. The arrangement of the second mounting hole 2321 can facilitate mounting and connection between the suspension insulator 220 and the second connecting plate 232. The second construction hole 2322 is configured to facilitate construction and provide more options for constructors.

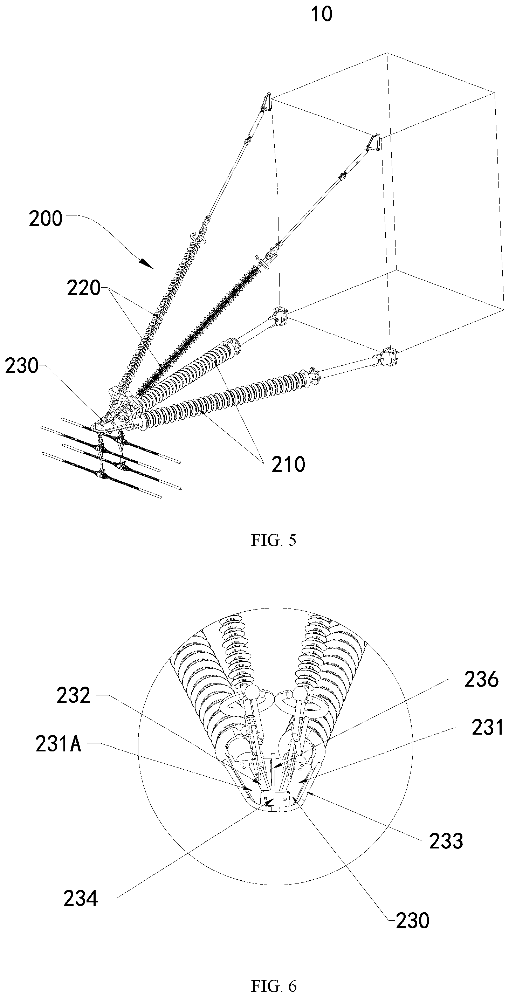

Referring to FIG. 5 and FIG. 6, in another embodiment, it is provided with two post insulators 210 and two suspension insulators 220. The node fitting 230 includes a first connecting plate 231, two second connecting plates 232, and a shielding ring 233, and the two second connecting plates 232 are spaced on a first surface 231A of the first connecting plate 231, and each second connecting plate 232 has a side connected to the first surface 231A. A plurality of first mounting holes are formed in the first connecting plate 231 and configured to mount the two post insulators 210, and a plurality of second mounting holes are formed in each of the two second connecting plates 232 and configured to be connected to the two suspension insulators 220. The node fitting 230 further includes a third connecting plate 234 and a wire attaching plate, and structures of the shielding ring 233, the third connecting plate 234, and the wire attaching plate are the same as the above structures, and are not repeated.

In an embodiment, a third construction hole is formed in the first connecting plate 231 of the node fitting 230 and configured for construction or maintenance of the composite crossarm 200.

In another embodiment, the third construction hole may also be formed in a fixing plate 236 mounted between the two second connecting plates 232, the fixing plate 236 is arranged on the first surface 231A and has a side connected to the first surface 231A, the third construction hole is formed in the fixing plate 236, and other auxiliary devices used in construction or maintenance of the composite crossarm 200 are fixedly connected to the node fitting 230 through the third construction hole. The arrangement of the fixing plate 236 can avoid interference between other auxiliary devices and the composite crossarm 200 when the other auxiliary devices are directly mounted to the first connecting plate 231, so that the mounting can be conveniently and rapidly performed. In other embodiments, the third construction hole may also be formed in other components of the node fitting, which is not limited herein.

The first connecting plate 231, the second connecting plate 232, the third connecting plate 234, the wire attaching plate, and the fixing plate 236 can be separately formed and then connected by welding, or can be directly formed integrally, which is not limited herein.

Referring to FIG. 1, the transmission tower 10 further includes a first hinged member 410 and a second hinged member 420, and both the first hinged member 410 and the second hinged member 420 are rotatable connectors. The first hinged member 410 is configured to connect a first end of the post insulator 210 to the tower body 100, so that the post insulator 210 can rotate relative to the tower body 100; the second hinged member 420 is configured to connect a first end of the suspension insulator 200 to the tower body 100, so that the suspension insulator 220 can rotate relative to the tower body 100.

In an embodiment, in case of providing two post insulators 210 and one suspension insulator 220, the two post insulators 210 and the suspension insulator 220 form a stable pyramidal structure, and meanwhile, the two post insulators 210 and the tower body 100 also form a stable triangular structure. Under normal conditions, although the first hinged member 410 and the second hinged member 420 support rotation, since the structures formed by the two post insulators 210, the suspension insulator 220, and the tower body 100 are stable, the composite crossarm 200 cannot be rotated relative to the tower body 100.

When one of the post insulators 210 is broken, due to a sudden load change, the suspension insulator 220 and the remaining post insulator 210 are driven to rotate relative to the tower body 100, so as to release an unbalanced tension load through rotation and avoid complete destruction of the composite crossarm 200, so that before maintenance of the composite crossarm 200, the composite crossarm 200 still has the ability to attach conductors to prevent a greater accident.

Since the design has the effect of releasing the unbalanced tension load to a certain extent, it can be considered to reduce a design specification in the design, and compared with a fixed connection, a design for small failure load condition can be adopted in the present application, so as to reduce a manufacturing cost.

Meanwhile, in the prior art, the post insulator 210 is usually connected to the tower body 100 in the form of a lap plate (including an insertion plate, or the like), the connection is actually between a fixed connection and a hinged connection, but in corresponding pressing stability calculation, for security reasons, the connection is often assumed as a hinged connection, and a boundary condition for the hinged connection is used, resulting in design redundancy. In the design of the present application, the connection between the post insulator 210 and the tower body 100, and the connection between the suspension insulator 220 and the tower body 100 are hinged connections, which is consistent with the boundary condition assumed in a stability calculation formula and can avoid the design redundancy.

It should be noted that although the above description is given with the embodiment with two post insulators 210 and one suspension insulator 220, the above description is also applicable to the embodiment with two post insulators 210 and two suspension insulators 220.

In some other embodiments, the composite crossarm and the tower body may also be connected by a fixed connector, and in this case, neither the post insulator nor the suspension insulator can rotate relative to the tower body.

Referring to FIG. 1, the tower body 100 includes a tower main body 110, a first support frame 120, and a second support frame 130. The first support frame 120 and the second support frame 130 are convexly arranged on a same side wall of the tower main body 110, the first support frame 120 is connected to the first end of the post insulator 210, and the second support frame 130 is connected to the first end of the suspension insulator 220.

The first support frame 120 can be designed adaptively according to a relative position and angle between the post insulator 210 and the tower body 100, and the second support frame 130 can be designed adaptively according to a relative position and angle between the suspension insulator 220 and the tower body 100.

Due to the arrangement of the first support frame 120 and the second support frame 130, on the one hand, the composite crossarm 200 and the tower body 100 can be conveniently and efficiently maintained; on the other hand, when plural composite crossarms 200 are arranged on the tower body 100, since a distance between the composite crossarm 200 and the tower body 100 can be adjusted by the first support frame 120 and the second support frame 130, sizes of the plural composite crossarms 200 can be consistent, thereby improving a production efficiency.

In some other embodiments, the first support frame and the second support frame can be omitted, and the post insulator and the suspension insulator can be directly mounted on the tower body. Alternatively, only the first support frame is mounted, the second support frame is omitted, and in this case, the post insulator is connected to the first support frame, and the suspension insulator is mounted directly on the tower body, which is not limited herein.

Referring to FIG. 1, FIG. 3, and FIG. 4, the transmission tower 10 includes at least one arcing device 500, each arcing device 500 includes an arcing ring 510 and an arcing end 520, and the arcing ring 510 is provided with a notch 530, so that the arcing ring 510 has two end portions; the arcing end 520 is located at one of the end portions of the arcing ring 510, and the arcing end 520 bends in a direction away from the arcing ring 510. The arcing end 520 is an arcing ball or arcing bar with a smooth surface.

The arching devices 500 can be selectively mounted on both ends of the post insulator 210 and the suspension insulator 220 for arching, so as to protect the composite crossarm 200. The arcing ring 510 is provided with the notch 530, so that on the one hand, materials can be saved, and on the other hand, the arcing end 520 can be prevented from contacting the arcing ring 510, and an arcing initiation effect of the arcing end 520 can be guaranteed; meanwhile, the arcing end 520 bends in the direction away from the arcing ring 510, which can further improve the arcing initiation effect of the arcing end 520.

With continued reference to FIG. 1, in order to further improve the safety performance and guarantee the service life of the composite crossarm 200, each of the two ends of the post insulator 210 is sleeved with a grading ring.

Finally, it should be noted that the above embodiments are only used to illustrate the technical solutions of the present application, not to limit the present application; although the present application is described in detail with reference to the above embodiments, those having ordinary skill in the art should understand that they still can modify technical solutions recited in the aforesaid embodiments or equivalently replace partial or all technical features therein; these modifications or substitutions do not make essence of corresponding technical solutions depart from the scope of technical solutions of embodiments of the present application, and all of them should be included in the scope of the claims and description of the present application. Particularly, as long as structural conflicts do not exist, all technical features mentioned in all the embodiments may be combined together in any mode. The present application is not limited to the specific embodiments disclosed in the description, but includes all technical solutions falling into the scope of the claims.

## Claims

1. A transmission tower, comprising
a tower body; and
a composite crossarm arranged on the tower body,
wherein the composite crossarm comprises at least one post insulator, at least one suspension insulator, and a node fitting, the post insulator has a first end connected to the tower body and a second end, the suspension insulator has a first end connected to the tower body and a second end, the second end of the post insulator and the second end of the suspension insulator are connected together by the node fitting, and the node fitting comprises:
a first connecting plate configured to be connected to the second end of the post insulator and comprising a first surface and a second surface which are opposite;
at least one second connecting plate mounted on the first surface, having a side connected to the first surface, and configured to be connected to the second end of the suspension insulator; and
a shielding ring mounted on the first surface.

2. The transmission tower according to claim 1,
wherein the shielding ring has a half surrounded structure and is arranged on a periphery of the first connecting plate.

3. The transmission tower according to claim 2,
wherein at least one connecting bracket is convexly arranged on the shielding ring, and the connecting bracket is connected to the first surface.

4. The transmission tower according to claim 2,
wherein the node fitting further comprises:
a third connecting plate mounted on the first surface, having a side connected to the second connecting plate, and located inside the shielding ring.

5. The transmission tower according to claim 4,
wherein any two of the first connecting plate, the second connecting plate, and the third connecting plate are arranged perpendicularly.

6. The transmission tower according to claim 1,
wherein the shielding ring has a plane symmetry structure, and a symmetry plane of the shielding ring is parallel to the first connecting plate.

7. The transmission tower according to claim 1,
wherein it is provided with plural shielding rings which are stacked.

8. The transmission tower according to claim 1,
wherein the node fitting further comprises a wire attaching plate mounted on the second surface and having a side connected to the second surface, the wire attaching plate is provided with two spaced first wire attaching holes and a first construction hole located between the two first wire attaching holes, and the two first wire attaching holes and the first construction hole are arranged at intervals in a direction parallel to the first connecting plate.

9. The transmission tower according to claim 8,
wherein a symmetry plane perpendicular to a plate surface of the first connecting plate, a symmetry plane parallel to a plate surface of the second connecting plate, and a symmetry plane parallel to a plate surface of the wire attaching plate overlap.the first connecting plate is perpendicular to a symmetry plane of a plate surface, the second connecting plate is parallel to the symmetry plane of the plate surface, and the wire attaching plate is parallel to and coincides with the symmetry plane of the plate surface.

10. The transmission tower according to claim 1,
wherein the first connecting plate is provided with a first mounting hole for mounting the post insulator;
the second connecting plate is provided with a second mounting hole and a second construction hole, and the second mounting hole is configured to mount the suspension insulator.

11. The transmission tower according to claim 1, wherein the transmission tower further comprises:
a first hinged member configured for connecting the first end of the post insulator to the tower body, so that the post insulator is rotatable relative to the tower body; and
a second hinged member configured for connecting the first end of the suspension insulator to the tower body, so that the suspension insulator is rotatable relative to the tower body.

12. The transmission tower according to claim 1, wherein the tower body comprises:
a tower main body; and
a first support frame; and
a second support frame,
wherein the first support frame and the second support frame are convexly arranged on a same side wall of the tower main body, the first support frame is connected to the first end of the post insulator, and the second support frame is connected to the first end of the suspension insulator.

13. The transmission tower according to claim 1,
wherein the transmission tower comprises at least one arcing device, each arcing device comprises an arcing ring and an arcing end, and the arcing ring is provided with a notch, so that the arcing ring has two end portions, the arcing end is located at one of the end portions of the arcing ring, and the arcing end bends in a direction away from the arcing ring.

14. The transmission tower according to claim 1,
wherein two suspension insulators are arranged, two second connecting plates are arranged, and the two second connecting plates are spaced on the first surface and configured to be connected to the two suspension insulators respectively.

15. The transmission tower according to claim 14,
wherein a fixing plate is further arranged between the two second connecting plates, the fixing plate is arranged on the first surface and has a side connected to the first surface, and the fixing plate is provided with a third construction hole for construction and maintenance of the composite crossarm.
